# EUROPÄISCHE PATENTSCHRIFT

(11) **EP 3 018 386 B1**
(45) Veröffentlichungstag und Bekanntmachung des Hinweises auf die Patenterteilung: **26.07.2017**
(21) Anmeldenummer: 14192346.6
(22) Anmeldetag: 07.11.2014
(51) Int. Cl.: F16H 57/04

(54) **Fluidführungsvorrichtung und Kraftfahrzeuggetriebe**
Fluid conveying device and vehicle transmission
Dispositif de commande de fluide et boîte de vitesses de véhicule automobile

(43) Veröffentlichungstag der Anmeldung: 11.05.2016
(73) Patentinhaber: GETRAG B.V. & Co. KG, 74199 Untergruppenbach (DE)
(72) Erfinder: Bernhardt, Udo, 50259 Pulheim (DE)
(74) Vertreter: Witte, Weller & Partner Patentanwälte mbB

(56) Entgegenhaltungen:
- WO-A1-2006/015394
- DE-A1-102005 059 115
- GB-A- 2 006 348
- US-A- 2 935 889

## Beschreibung

Die vorliegende Erfindung betrifft eine Fluidführungsvorrichtung zur Fluidführung in einem Kraftfahrzeuggetriebe, dass eine nasslaufende Kupplung und ein Stufengetriebe aufweist, mit einer Basis, die dazu ausgebildet ist, um an einem Getriebegehäuse befestigt zu werden, mit einer Auffangeinrichtung zum Auffangen von Fluid und mit einer Zuführeinrichtung, die mit der Auffangeinrichtung verbunden ist, so dass aufgefangenes Fluid über die Zuführeinrichtung an einen Fluidverbraucher geführt werden kann, wobei die Auffangeinrichtung eine Kupplungsauffangeinrichtung aufweist, die dazu ausgbildet ist, im eingebauten Zustand von der Kupplung im Betrieb mitgenommenes Fluid aufzufangen, und eine Getriebeauffangeinrichtung aufweist, die dazu ausgebildet ist, im eingebauten Zustand von wenigstens einem Zahnrad im Betrieb mitgenommenes Fluid aufzufangen. So eine Fluidführungseinrichtung ist aus der gattungsgemässen WO2006015394A bekannt.

Ferner betrifft die vorliegende Erfindung ein Kraftfahrzeuggetriebe mit einer ersten drehend in einen Fluidsumpf eintauchenden Baugruppe und mit einer zweiten drehend in einen Fluidsumpf eintauchenden Baugruppe, wobei die erste und die zweite Baugruppe durch eine Trennwand voneinander abgegrenzt sind, und mit einer Fluidführungsvorrichtung, insbesondere der oben beschriebenen Art.

Kraftfahrzeuggetriebe der beschriebenen Art werden in Antriebsträngen von Personenkraftwagen und Nutzfahrzeugen verwendet. Ein Eingang des Kraftfahrzeuggetriebes ist in der Regel mit einem Antriebsmotor verbunden, der als Verbrennungsmotor, als Hybrid-Antriebseinheit oder dergleichen ausgebildet sein kann. Ein Ausgang des Kraftfahrzeuggetriebes ist in der Regel mit einem Differenzial verbunden, mittels dessen Antriebsleistung auf angetriebene Räder verteilt werden kann.

Das Kraftfahrzeuggetriebe beinhaltet dabei in der Regel eine Kupplungseinrichtung und ein Stufengetriebe. Die Kupplungseinrichtung kann als einzelne Trennkupplung ausgebildet sein, ist jedoch vorzugsweise als Doppelkupplung ausgebildet. Das Stufengetriebe kann ein einfaches Stufengetriebe mit mehreren Gangstufen, mindestens zwei, in der Regel sechs, sieben oder mehr Vorwärtsgangstufen, sein. Insbesondere kann das Stufengetriebe jedoch zwei Teilgetriebe aufweisen, sodass es mit einer Doppelkupplung ein Doppelkupplungsgetriebe bildet.

Die Kupplungseinrichtung und das Stufengetriebe können mit unterschiedlichen Fluiden betrieben werden, beispielsweise ATF-Öl und Hypoid-Öl.

Es ist jedoch auch möglich, die Kupplungseinrichtung und das Stufengetriebe mit demselben Fluid zu betreiben.

Aus dem Dokument DE 10 2004 060 595 B3 ist eine Doppelkupplungsanordnung bekannt, bei der ein Bodenbereich eines Kupplungsgehäuses durch eine Trenneinrichtung in einen ersten Bereich und einen zweiten Bereich unterteilt ist, wobei die Bereiche nach oben hin offen sind. Die Reibkupplung taucht im Betrieb von oben in den ersten Bereich hinein und nimmt darin aufgenommenes Fluid mit. Dieses Fluid wird über das Kupplungsgehäuse in den zweiten Bereich geführt, wo es sich aufstaut. Hierdurch können Plantschverluste in der Doppelkupplungsanordnung vermieden beziehungsweise verringert werden.

Aus dem Dokument DE 10 2005 059 115 A1 ist ein Ölschmiersystem für eine Mehrfachkupplung bekannt. Eine Antriebsnabe stützt sich über ein Wälzlager an einem Gehäusedeckel ab. Zwischen Gehäusedeckel und der Antriebsnabe ist ein Wellendichtring angeordnet. In einem zwischen Gehäusedeckel und Kupplungskorb vorgesehenen axialen Raum ist ein radial ausgerichtetes Leitblech angeordnet, um aus dem Kupplungskorb herausgeschleudertes Schmieröl gezielt zum Wälzlager und weiter durch dasselbe hindurch zu dem Wellendichtring zu leiten.

Ferner offenbart das Dokument DE 195 01 799 ein Ölschmiersystem, bei dem eine Getriebewelle eine achsversetzt angeordnete Schmierölbohrung aufweist. Um die Welle herum ist eine ringförmige Kammer vorgesehen, in der ein Förderelement aus einem Fang- und Leitelement angeordnet ist. Das von der Getriebewelle geförderte Öl staut sich an dem Blech und wird in die Schmierölbohrung gedrückt.

Ferner offenbart das Dokument DE-A-2834700 ein Kraftfahrzeuggetriebe, bei dem ein Vorsprung auf einer Innenwand eines Gehäuses oberhalb eines Zwischenzahnrades ausgebildet ist, sodass der Vorsprung mit Schmieröl angespritzt wird, das durch die Drehung des Zwischenzahnrades nach oben geschleudert wird. Ein Ölaufnehmer ist an der Innenwand des Gehäuses neben einem Lager für eine Zwischenwelle angeordnet, und zwar so, dass Schmieröl, das von dem Vorsprung abtropft, in den Ölaufnehmer geleitet wird. Von dort tropft es zu dem Lager hin ab.

Aus dem Dokument WO 2006/015394 ist ein Verteilergetriebe für Kraftfahrzeuge bekannt, bei dem zwischen einer Kupplung und einem Versatztrieb ein Ölreservoir angeordnet ist, das mindestens eine in den Schleuderbereich des Versatztriebes reichende Leiteinrichtung aufweist, durch die abgeschleudertes Schmieröl in das Reservoir gelangt.

Es ist vor diesem Hintergrund eine Aufgabe der Erfindung, eine verbesserte Fluidführungsvorrichtung sowie ein verbessertes Kraftfahrzeuggetriebe anzugeben.

Die obige Aufgabe wird bei der eingangs genannten Fluidführungsvorrichtung dadurch gelöst, dass sich die Zuführeinrichtung in einer Längsrichtung von der Basis erstreckt.

Die Aufgabe wird ferner durch ein Kraftfahrzeuggetriebe mit einer erfindungsgemäßen Fluidführungsvorrichtung gelöst.

Die Fluidführungsvorrichtung dient dazu, Fluid an einen Verbraucher oder einer Mehrzahl von Verbrauchern zuzuführen. Dabei wird Fluid mittels der erfindungsgemäßen Fluidführungsvorrichtung nicht nur von der Kupplung oder einer Baugruppe des Getriebes aufgefangen. Die erfindungsgemäße Fluidführungsvorrichtung sieht vielmehr vor, das sowohl von der Kupplung hochgeschleudertes Fluid aufgefangen und der Zuführeinrichtung zugeführt wird, als auch Fluid aufgefangen wird, das von einer Baugruppe (beispielsweise einem Zahnrad des Stufengetriebes) hochgeschleudert wird, um es der Zuführeinrichtung zuzuführen.

Es ist möglich, das zuzuführende Fluid an einer geeigneten Stelle dem Fluidverbraucher zuzuführen. Vorzugsweise erstreckt sich die Zuführeinrichtung dabei in die gleiche Längsrichtung wie die Getriebeauffangeinrichtung, um Fluid insbesondere Bauteilen des Stufengetriebes zuzuführen.

Das über die Zuführeinrichtung zu dem Fluidverbraucher geführte Fluid kann zur Schmierung beziehungsweise Kühlung von Lagerstellen, von Losrädern und insbesondere zur inneren Beölung von Getriebewellen verwendet werden, insbesondere zur Fluidversorgung für ein Support-Lager einer nassen Doppelkupplung.

Durch die Maßnahme, sowohl eine Kupplungsauffangeinrichtung als auch eine Getriebeauffangeinrichtung vorzusehen, kann eine Fluidversorgung über die Zuführeinrichtung unter einer Vielzahl von Betriebszuständen gewährleistet werden.

Wenn beispielsweise das Kraftfahrzeug steht und der Antriebsmotor läuft und die Kupplung geöffnet ist, dreht sich ein Eingangsglied der Kupplung und kann folglich Fluid aus dem Fluidsumpf zu der Kupplungsauffangeinrichtung fördern, von der aus das Fluid dann zur Zuführeinrichtung geführt wird.

Wenn hingegen der Antriebsmotor ausgeschaltet ist und die Kupplung geöffnet ist, dreht sich die Kupplung nicht. Wenn in diesem Fall das Kraftfahrzeug abgeschleppt wird, kann über die Getriebeauffangeinrichtung gewährleistet werden, dass, bei eingelegter Gangstufe, Fluid zu der Getriebeauffangeinrichtung gefördert wird, von wo aus das Fluid dann zu der Zuführeinrichtung geführt wird.

Folglich kann eine Schmierung auch für den Fall des Abschleppens des Kraftfahrzeuges gewährleistet werden, auch ohne dass der Antriebsmotor angeschaltet werden muss.

Durch geeignete Maßnahmen kann zudem erreicht werden, dass die Getriebeauffangeinrichtung Fluid sowohl bei einem Abschleppen in Vorwärtsrichtung als auch bei einem Abschleppen in Rückwärtsrichtung erhält, um dieses der Zuführeinrichtung zuzuführen.

Bei dem eingangs genannten Kraftfahrzeuggetriebe wird die obige Aufgabe dadurch gelöst, dass die Fluidführungsvorrichtung eine Basis aufweist, die auf der axialen Seite der ersten Baugruppe (beispielsweise der Kupplung) an der Trennwand festgelegt ist, wobei die Fluidführungsvorrichtung eine Auffangeinrichtung (beispielsweise Kupplungsauffangeinrichtung) aufweist, die dazu ausgebildet ist, von der ersten Baugruppe mitgenommenes Fluid aufzufangen und zu einer Zuführeinrichtung zu fördern, die sich von der Basis aus durch die Trennwand hindurch erstreckt.

Mit anderen Worten kann bei dem erfindungsgemäßen Kraftfahrzeuggetriebe erreicht werden, dass von der Kupplung hochgeschleudertes Fluid auf einer Seite einer Trennwand aufgefangen wird und auf die axial gegenüberliegende Seite der Trennwand des Getriebes einem Fluidverbraucher zugeführt wird, beispielsweise einem Fluidverbraucher der einem Stufengetriebe zugeordnet ist, das die zweite Baugruppe beinhaltet.

Die Fluidführungsvorrichtung des erfindungsgemäßen Kraftfahrzeuggetriebes ist vorzugsweise eine Fluidführungsvorrichtung der oben beschriebenen erfindungsgemäßen Art.

Die Aufgabe wird somit vollkommen gelöst.

Gemäß einer besonders bevorzugten Ausführungsform der Fluidführungsvorrichtung erstrecken sich die Kupplungsauffangeinrichtung und die Getriebeauffangeinrichtung in entgegengesetzte Längsrichtungen von der Basis.

Hierdurch ist es möglich, die Kupplungsauffangeinrichtung und die Getriebeauffangeinrichtung jeweils auch räumlich einem Kupplungsgehäuseabschnitt und einem Getriebegehäuseabschnitt zuzuordnen, die in Längsrichtung versetzt zueinander, insbesondere benachbart zueinander angeordnet sind.

Generell ist es denkbar, dass die Fluidführungsvorrichtung sich aus mehreren Bauteilen zusammensetzt, die dann jedoch vorzugsweise miteinander verbunden sind, insbesondere auch lösbar verbunden sind.

Vom besonderen Vorzug ist es jedoch, wenn die Fluidführungsvorrichtung als einstückiges Bauteil ausgebildet ist.

Die Fluidführungsvorrichtung kann dabei beispielsweise aus einem Kunststoffmaterial hergestellt sein, beispielsweise durch Spritzgießen. Die einstückige Fluidführungsvorrichtung kann in einem Spritzgussvorgang hergestellt sein, oder kann aus mehreren Spritzgussteilen zusammengesetzt sein, und zwar vorzugsweise durch unlösbares Verbinden, wie Kleben oder thermoplastisches Schweißen. Durch diese Maßnahme ist es möglich, den Bereitstellungsaufwand und den Montageaufwand zu minimieminimieren, da die gesamte Fluidführungsvorrichtung nur durch ein einzelnes Bauteil gebildet ist, dessen Basis zur Montage an dem Getriebegehäuse oder einem damit verbundenen Gehäuseabschnitt verbunden wird.

Ferner ist es insgesamt vorteilhaft, wenn die Zuführeinrichtung einen Rohrstutzen aufweist, der dazu ausgebildet ist, in eine Fluidzuführöffnung einer Welle eingeführt zu werden.

Hierdurch ist es möglich, das aufgefangene Fluid über einen solchen Rohrstutzen in eine Welle einzuführen, die eine axial Bohrung zur Fluidführung aufweist. Von dort kann das Fluid dann in einer an sich bekannten Weise weiterverteilt werden, beispielsweise durch Radialöffnungen in der Welle, oder direkt zu einem Support-Lager oder dergleichen.

Ferner ist es insgesamt vorteilhaft, wenn die Zuführeinrichtung zumindest im Bereich der Verbindung mit der Auffangeinrichtung geteilt ausgebildet ist, sodass Fluid von der Kupplungsauffangeinrichtung und Fluid von der Getriebeauffangeinrichtung in die Zuführeinrichtung geleitet werden können, ohne sich gegenseitig zu behindern.

Beispielsweise kann bei Ausbildung der Zuführeinrichtung als Rohrstutzen auf der Eingangsseite eine sich etwa diametral erstreckende Trennwand ausgebildet sein, gegen die die Fluidströme von der Kupplungsauffangeinrichtung und von der Getriebeauffang-einrichtung von entgegengesetzter Seite strömen und dann in Richtung in das Innere der Zuführeinrichtung geleitet werden.

Vorteilhaft ist es insgesamt ferner, wenn die Basis eine sich in radialer Richtung erstreckende Platte aufweist, wobei an der Platte eine Rinne ausgebildet ist, die die Getriebeauffangeinrichtung mit der Zuführeinrichtung verbindet.

Die Rinne kann sich hierbei insbesondere quer zu der Längsrichtung erstrecken, also in radialer, tangentialer oder einer sonstigen geeigneten Richtung quer zur Längsrichtung, so dass Fluid von der Getriebeauffangeinrichtung zunächst in einer Längsrichtung in der Wanne in die Rinne geführt wird, anschließend dort quer zu der Längsrichtung verläuft und dann vorzugsweise in die entgegengesetzte Längsrichtung wieder in die Zuführeinrichtung eingeleitet wird.

Die Platte wird vorzugsweise auf der Seite einer Kupplung an einer radialen Trennwand des Kraftfahrzeuggetriebes befestigt.

Hierdurch ist es möglich, die Kupplungsauffangeinrichtung besonders effizient auszugestalten, derart, dass eine vergleichsweise große Fluidmenge aufgefangen und der Zuführeinrichtung zugeführt werden kann.

Die Rinne ist hierbei vorzugsweise ebenfalls auf der Seite der Kupplung an der Platte ausgebildet.

Insbesondere dann, wenn sich die Kupplungsauffangeinrichtung und die Getriebeauffangeinrichtung in entgegengesetzte Längsrichtungen von der Basis erstrecken, ist es hierbei möglich, dass die Getriebeauffangeinrichtung und vorzugsweise auch die Zuführeinrichtung dazu ausgebildet sind, sich durch die Trennwand hindurch zu erstrecken, an der die Platte der Basis im eingebauten Zustand festgelegt wird.

Gemäß einer weiteren bevorzugten Ausführungsform, die in Verbindung mit dem Oberbegriff des Anspruchs 1 eine eigene Erfindung darstellt, weist die Auffangeinrichtung einen Arm auf, der sich von der Basis erstreckt und dazu ausgebildet ist, um parallel zu einer Innenwand des Getriebegehäuses angeordnet zu werden.

Von besonderem Vorzug ist es dabei, wenn der Arm dazu ausgebildet ist, direkt in Anlage an einer Innenwand des Getriebegehäuses angeordnet zu werden, vorzugsweise entlang einer Linie, die durch eine konzentrisch zu einer Längsachse angeordnete Innenumfangsoberfläche des Getriebegehäuses gebildet ist. Der Arm erstreckt sich folglich im Wesentlichen in Längsrichtung und parallel versetzt zu der erwähnten Längsachse. Von besonderem Vorzug ist es wie erwähnt, wenn der Arm dazu ausgebildet ist, um direkt an einer solchen Innenwand des Getriebegehäuses angeordnet zu werden, insbesondere an einer Innenwand eines Kupplungsgehäuseabschnittes des Getriebegehäuses. Auf diese Weise ist es möglich, an der Wand aufgrund der Drehung der Kupplung hochströmendes beziehungsweise hochkriechendes Fluid aufzufangen.

Dabei ist es von besonderem Vorteil, wenn der Arm einen gegenüber einer Längsachse geneigten Abschnitt aufweist, der dazu ausgebildet ist, in einer Umfangsrichtung um die Längsachse herum strömendes Fluid aufzufangen und in Richtung hin zu der Basis zu fördern.

Durch den geneigten Abschnitt wird das aufgefangene und um die Längsachse herum strömende Fluid, insbesondere an der Innenwand hochströmendes Fluid, aufgestaut und derart umgelenkt, dass es in Richtung hin zu der Basis gefördert wird, nach der Art eines Trichters. Vorteilhaft für diese Funktion ist eine Relativgeschwindigkeit zwischen dem Arm und dem Fluid in Umfangsrichtung.

Das zu der Basis hinströmende Fluid wird dann vorzugsweise zu einem Eingang der Zuführeinrichtung geführt, wobei der Eingang vorzugsweise geteilt ist, wie bereits oben ausführlich erwähnt.

Bei dem erfindungsgemäßen Kraftfahrzeuggetriebe wird Fluid auf einer Seite einer Trennwand aufgefangen und zwar mittels einer Auffangeinrichtung, insbesondere der Kupplungsauffangeinrichtung. Das aufgefangene Fluid wird dann zu der Zuführeinrichtung gefördert, und zwar durch die Trennwand hindurch. Bevorzugt ist es hierbei, wenn die Zuführeinrichtung selbst sich durch die Trennwand hindurch erstreckt, so dass das Fördern zu der Zuführeinrichtung noch auf jener Seite der Trennwand erfolgen kann, an der die Basis festgelegt ist.

Gemäß einer weiteren bevorzugten Ausführungsform, die in Verbindung mit dem Oberbegriff des Anspruchs 10 eine eigene Erfindung darstellt, weist die Fluidführungsvorrichtung eine sich in einer Längsrichtung erstreckenden Wanne auf, die in axialer Überschneidung mit einem Zahnrad der zweiten Baugruppe angeordnet ist, wobei eine erste Leitrippe in Bezug auf die Wanne so angeordnet ist, dass Fluid bei einer ersten Drehrichtung des Zahnrades mittels der ersten Leitrippe in die Wanne gefördert wird, und/oder wobei eine zweite Leitrippe in Bezug auf die Wanne so angeordnet ist, dass Fluid bei einer zweiten Drehrichtung des Zahnrades mittels der zweiten Leitrippe in die Wanne gefördert wird.

Bei dieser Maßnahme kann über das Zahnrad beziehungsweise über einen Radsatz, der dieses Zahnrad und ein weiteres Zahnrad aufweist, Fluid in die Wanne gefördert werden, unabhängig davon, in welcher Richtung sich das Zahnrad beziehungsweise der Radsatz dreht. Hierdurch kann Fluid in die Wanne befördert werden, wenn das Fahrzeug vorwärts fährt, aber auch dann, wenn es rückwärts fährt. Das Zahnrad ist dabei vorzugsweise Bestandteil des Stufengetriebes und ist Teil eines Konstanten-Radsatzes oder eines Gang-Radsatzes des vorzugsweise in Vorgelegebauweise ausgeführten Stufengetriebes.

Ferner kann bei dieser Ausgestaltung gewährleistet werden, dass Fluid auch dann hin zu der Zuführeinrichtung gefördert wird, wenn das Fahrzeug abgeschleppt wird, und zwar unabhängig davon, ob es so abgeschleppt wird, dass die angetriebenen Räder sich vorwärts drehen, oder rückwärts drehen. Hierdurch kann in allen Situationen eine hinreichende Fluidversorgung des angeschlossenen Fluidverbrauchers gewährleistet werden. Der Fluidverbraucher kann dabei insbesondere einen Support-Lager für die Kupplung sein.

Die erste Leitrippe und/oder die zweite Leitrippe könne an der Basis der Fluidführungsvorrichtung festgelegt sein, sind jedoch vorzugsweise an der Trennwand festgelegt. Die Leitrippen sind vorzugsweise im Wesentlichen radial und/oder tangential zu der Längsachse angeordnet und können in einer Ausführungsform ermöglichen, dass hochspritzendes Fluid aufgrund der Geschwindigkeit in tangentialer Richtung strömt. Eine erste Leitrippe ist dabei vorzugsweise etwa parallel zu einem Innenumfangsabschnitt des Getriebegehäuseabschnittes des Getriebegehäuses angeordnet, derart, dass Fluid auf die Unterseite der ersten Leitrippe spritzt, wenn das Zahnrad sich in der ersten Drehrichtung dreht. Von der Unterseite der ersten Leitrippe kann das Fluid, das eine Geschwindigkeit in tangentialer Richtung besitzt, dann über eine geeignete Ausgestaltung der ersten Leitrippe in die Wanne hinein abgelenkt werden, also dann in radialer Richtung nach innen.

Die zweite Leitrippe kann insbesondere an dem Innenumfang des Getriebegehäuseabschnittes festgelegt sein. In der zweiten Drehrichtung kann das Fluid dabei insbesondere gegen die Innenwand des Getriebegehäuseabschnittes hochgeschleudert und daran gefördert werden, bis es auf die zweite Leitrippe trifft, die das Fluid dann in radialer Richtung hin zu der Wanne ablenkt und in diese fördert.

Insgesamt ermöglicht die vorliegende Erfindung je nach Ausgestaltung, Lagerstellen, Zahnräder wie Losräder sowie gegeneinander drehende Bauteile innerhalb eines Getriebe in allen Betriebszuständen gut mit Fluid zu versorgen beziehungsweise zu beölen, um einen sicheren und verschleißfreien Betrieb zu ermöglichen. Insbesondere die innere Beölung von Getriebewellen ist dabei wichtig, um auf einer solchen Getriebewelle sitzende Komponenten mit ausreichend Öl zu versorgen. Diese Komponenten sind insbesondere Lager sowie axiale und radiale Anlaufflächen benachbarter Bauteile. Die denkbaren Betriebszustände sind Vorwärtsfahrt, Rückwärtsfahrt, laufender Motor im Fahrzeugstillstand, sowie Abschleppen vorwärts und rückwärts. Die vorliegende Erfindung ermöglicht es vorzugsweise, in allen diesen Betriebszuständen eine hinreichend hohe Menge an Fluid zu dem Fluidverbraucher zu fördern, insbesondere zu einer Getriebeausgangswelle, über die Fluid auch einem Support-Lager der Kupplung zugeführt wird, bei der es sich vorzugsweise um eine nasslaufende Doppelkupplung handelt.

All diese Vorteile werden vorzugsweise mit nur einem einzigen Bauteil realisiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht eines Getriebeabschnittes mit einer Ausführungsform einer erfindungsgemäßen Fluidführungsvorrichtung;
- Fig. 2: eine weitere perspektivische Ansicht der Fluidführungsvorrichtung der Fig. 1 in Kombination mit Leitrippen;
- Fig. 3: eine schematische Darstellung eines Antriebsstranges mit einer schematischen Seitenansicht der Fluidführungsvorrichtung der Fig. 1 und 2;
- Fig. 4: eine weitere perspektivische Ansicht der Fluidführungsvorrichtung der Fig. 1 - 3;
- Fig. 5: eine axiale Draufsicht auf die Fluidführungsvorrichtung der Figuren 1 - 4; und
- Fig. 6: eine Querschnittsansicht der Fluidführungsvorrichtung der Fig. 1-5 mit Darstellung einer Rinne und einem geteilten Eingang einer Zuführeinrichtung.

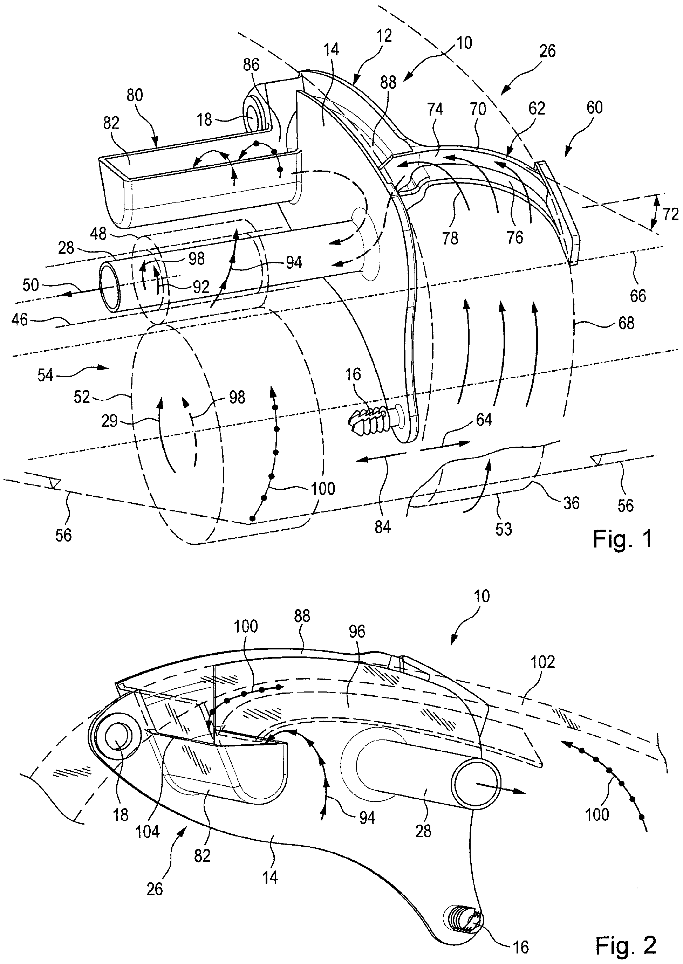

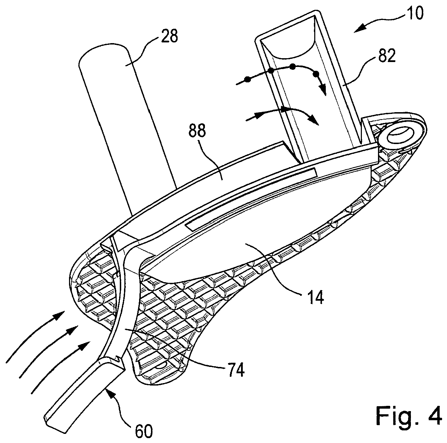

In den Figuren 1 - 6 ist eine Ausführungsform einer Fluidführungsvorrichtung dargestellt und generell mit 10 bezeichnet. Die Fluidführungsvorrichtung dient zur Fluidführung in einem Kraftfahrzeuggetriebe, und dient insbesondere dazu, von Baugruppen des Kraftfahrzeuggetriebes aus einem Fluidsumpf hochgeschleudertes Fluid aufzufangen und gezielt einem oder mehreren Fluidverbrauchern zuzuführen.

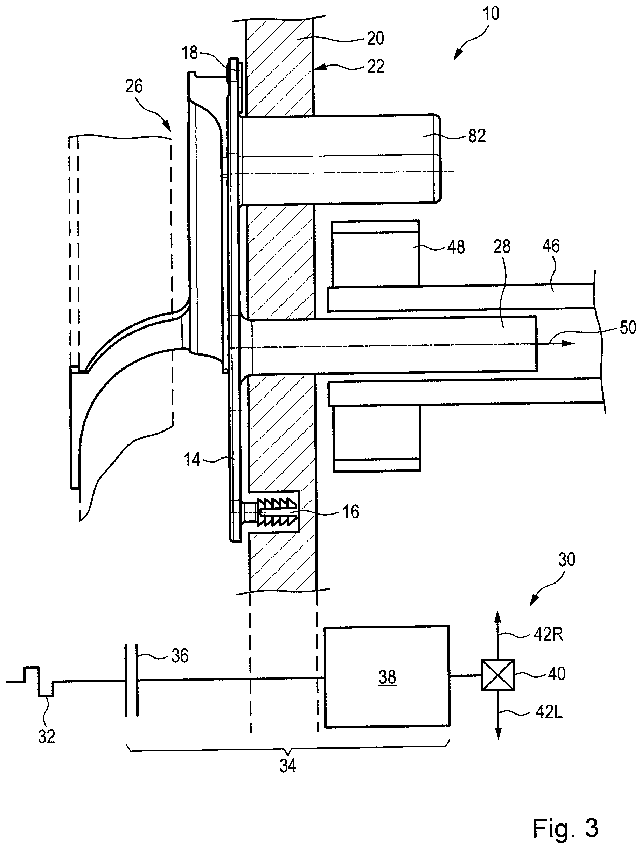

Die in den Figuren dargestellte Fluidführungsvorrichtung 10 weist zu diesem zweck eine Basis 12 auf, die an einem Gehäuse des Kraftfahrzeuggetriebes befestigbar ist. Die Basis 12 ist vorliegend als Platte 14 ausgebildet, die sich in einer radialen Richtung erstreckt und mittels einer ersten Befestigungseinrichtung 16 (vorliegend in Form eines Zapfens) und einer zweiten Befestigungseinrichtung 18 (vorliegend in Form einer Durchgangsöffnung) an einer Trennwand 20 (siehe Fig. 3) eines Getriebegehäuses 22 befestigbar ist.

Die Fluidführungsvorrichtung 10 weist eine Auffangeinrichtung 26 auf, mittels der Fluid von einer sich drehenden, in einen Fluidsumpf eintauchenden Baugruppe aufgefangen werden kann, wobei das Fluid dann einer Zuführeinrichtung 28 der Fluidführungsvorrichtung 10 zugeführt wird, über die das Fluid einem oder mehreren Fluidverbrauchern zugeführt werden kann. Die Zuführeinrichtung 28 ist insbesondere durch einen Rohrstutzen gebildet, der sich in einer Längsrichtung von der Basis 12 erstreckt. Genauer gesagt ist in der Platte 14 der Basis 12 eine kreisrunde Öffnung ausgebildet, von der aus sich der Rohrstutzen der Zuführeinrichtung 28 erstreckt. Wie es in Fig. 3 gezeigt ist, erstreckt sich der Rohrstutzen von der Platte 14 von der Basis 12 aus in Richtung hin zu dem Stufengetriebe 38 also durch die Trennwand 20 hindurch und in einer Fluidzuführöffnung der Welle hinein.

Zur Verdeutlichung wird zunächst unter Bezugnahme auf Fig. 3 ein Antriebsstrang 30 für ein Kraftfahrzeug erläutert. Der Antriebstrang 30 weist einen Antriebsmotor 32 auf, dessen Antriebswelle mit einer Getriebeanordnung 34 verbunden ist. Die Getriebeanordnung 34 in Form eines Kraftfahrzeuggetriebes beinhaltet eine Kupplungseinrichtung 36, bei der es sich insbesondere um eine nasslaufende Kupplungseinrichtung handelt, wie beispielsweise eine nasslaufende Doppelkupplung. Ferner beinhaltet die Getriebeanordnung 34 ein Stufengetriebe 38, das insbesondere in Vorgelegebauweise ausgeführt ist. Das Stufengetriebe 38 kann zur Bildung eines Doppelkupplungsgetriebes durch zwei Teilgetriebe gebildet sein, also beispielsweise eine Eingangswellenanordnung mit einer Innenwelle und einer Hohlwelle aufweisen, die mit zwei Kupplungen der Kupplungseinrichtung 36 verbunden sind. Ein Ausgang der Getriebeanordnung 34 ist mit einem Differenzial 40 verbunden, mittels dessen Antriebsleistung auf angetriebene Räder 42L, 42R verteilbar ist. In Fig. 3 ist angedeutet, dass die Trennwand 20 in axialer Richtung zwischen der Kupplungseinrichtung 36 und dem Stufengetriebe 38 angeordnet ist. Die Kupplungseinrichtung 36 und das Stufengetriebe 38 werden vorzugsweise mittels desselben Fluides betrieben, weisen also eine gemeinsame Fluidfüllung auf, die beispielsweise durch ein ATF-Fluid gebildet sein kann.

Wie es in Fig. 3 dargestellt ist, ist die Platte 14 der Basis 12 auf der der Kupplungseinrichtung 36 zugewandten axialen Seite der Trennwand 20 festgelegt und erstreckt sich in radialer Richtung, wie auch die Trennwand 20, die als radiale Trennwand ausgebildet ist.

Wie es in Fig. 3 und auch Fig. 1 angedeutet ist, dient die Zuführeinrichtung 28 zum Zuführen von Fluid zu einer Welle 46 des Stufengetriebes 38, bei der sich beispielsweise um eine Getriebeausgangswelle handeln kann. Wie es in Fig. 3 und in Fig. 1 ferner dargestellt ist, ist an der Welle 46 vorzugsweise ein erstes Zahnrad 48 festgelegt oder drehbar gelagert. Das erste Zahnrad 48 ist in axialer Richtung benachbart zu der Trennwand 20 angeordnet. In Fig. 3 und Fig. 1 ist ferner zu erkennen, dass über die Zuführeinrichtung 28 Fluid 50 in das Innere der Welle 46 geleitet wird.

Das Stufengetriebe 38 weist ferner ein zweites Zahnrad 52 auf, das mit dem ersten Zahnrad 48 in Eingriff steht, wie es in Fig. 1 schematisch angedeutet ist.

Die Kupplungseinrichtung 36 auf der einen axialen Seite der Trennwand 20 bildet eine erste Baugruppe 53. Das erste Zahnrad 48 und das zweite Zahnrad 52 bilden auf der gegenüberliegenden axialen Seite der Trennwand 20 bilden eine zweite Baugruppe 54.

Die erste und die zweite Baugruppe 53, 54 tauchen in einem Ruhezustand in einen Fluidsumpf 56 ein, wie es in Fig. 1 schematisch angedeutet ist. Dies führt dazu, dass die erste Baugruppe 53 und die zweite Baugruppe 54 für den Fall ihres Drehantriebes Fluid hochschleudern, das von der Auffangeinrichtung 26 aufgefangen wird.

Die Auffangeinrichtung 26 weist vorliegend eine Auffangeinrichtung für die erste Baugruppe 53 auf, und zwar in Form einer Kupplungsauffangeinrichtung 60. Die Kupplungsauffangeinrichtung 60 weist einen Arm 62 auf, der sich in einer ersten Längsrichtung 64 von der Basis 12 erstreckt, wobei die erste Längsrichtung 64 in Richtung hin zu der Kupplungseinrichtung 36 ausgerichtet ist. Der Arm 62 erstreckt sich in axialer Richtung entlang einer Innenumfangsfläche 68 des Getriebegehäuses 22, wobei die Innenumfangsfläche 68 konzentrisch zu einer Längsachse 66 ausgebildet ist. Die Längsachse 66 kann mit der Drehachse des zweiten Zahnrades 52 zusammenfallen, kann jedoch auch eine separate Längsachse sein.

Die Kupplungseinrichtung 36 weist in der Regel einen Korb auf, der mit dem Antriebsmotor 32 verbunden ist und in den Fluidsumpf 56 eintaucht. Über den Korb (in Fig. 1 nicht näher bezeichnet) wird bei laufendem Antriebsmotor 32 Fluid aus dem Fluidsumpf 56 hochgeschleudert und zwar entlang der Innenumfangsfläche 68, wie es durch entsprechende Pfeile in Fig. 1 angedeutet ist.

Der Arm 62 weist einen geneigten Abschnitt 70 auf, der unter einem Winkel in Bezug auf die Umfangsrichtung ausgerichtet ist, entlang der das hochgeschleuderte Fluid entlang der Innenumfangsfläche 68 strömt. Der Winkel des geneigten Abschnittes 70 ist in Fig. 1 mit 72 schematisch angedeutet. Der geneigte Abschnitt 70 kann auch ein gekrümmter Abschnitt sein, jedenfalls ist ein Teil des geneigten Abschnittes 70 unter einem Winkel 72 in Bezug auf die Längsachse 66 ausgerichtet, der größer ist als 0 Grad insbesondere größer als 10 Grad und insbesondere größer als 30 Grad.

Der Arm 62 weist ferner einen Radialsteg 74 auf, der sich in radialer Richtung erstreckt und zur Anlage an der Innenumfangsfläche 68 ausgebildet ist. Ferner weist der Arm 62 einen Tangentialsteg 76 auf, der sich von dem radial inneren Ende des Radialsteges 74 aus erstreckt, und zwar in einer Richtung entgegen der Strömungsrichtung des Fluides an der Innenumfangsfläche 68.

Das Fluid, das an der Innenumfangsfläche 68 hochströmt, wird folglich in einen Bereich zwischen dem Tangentialsteg 76 und der Innenumfangsfläche 68 geleitet, wo es auf den Radialsteg 74 auftrifft. Aufgrund der Neigung des Arms 62 in diesem Bereich wird das Fluid dann aus der tangentialen Strömungsrichtung in Richtung hin zu der Basis 12 abgelenkt, und zwar durch den Radialsteg 74. Das auf diese Weise aufgefangene Fluid 78 wird dann der Zuführeinrichtung 28 zugeführt, und zwar über einen nicht näher bezeichneten Schacht, der das Fluid hin zu einer Eintrittsöffnung der Zuführeinrichtung 28 führt, wie es in Fig. 1 schematisch durch einen gestrichelten Pfeil angedeutet ist.

Die Auffangeinrichtung 26 beinhaltet ferner eine Getriebeauffangeinrichtung 80 für die zweite Baugruppe 54. Die Getriebeauffangeinrichtung 80 beinhaltet eine Wanne 82, die sich in einer zweiten Längsrichtung 84 von der Platte 14 der Basis 12 aus erstreckt, wobei die zweite Längsrichtung 84 entgegengesetzt ist zu der ersten Längsrichtung 64. Die Wanne 82 erstreckt sich folglich von der Platte 14 in der gleichen Längsrichtung wie der Rohrstutzen der Zuführeinrichtung 28. Wie es in Fig. 3 dargestellt ist, erstreckt sich die Wanne 82 dabei insbesondere durch eine Öffnung in der Trennwand 20 hindurch. Die Wanne 82 weist eine solche axiale Länge auf, das die Wanne in axialer Überschneidung mit dem ersten Zahnrad 48 und dem zweiten Zahnrad 52 ausgerichtet ist, wie es ebenfalls in Fig. 1 und 3 dargestellt ist.

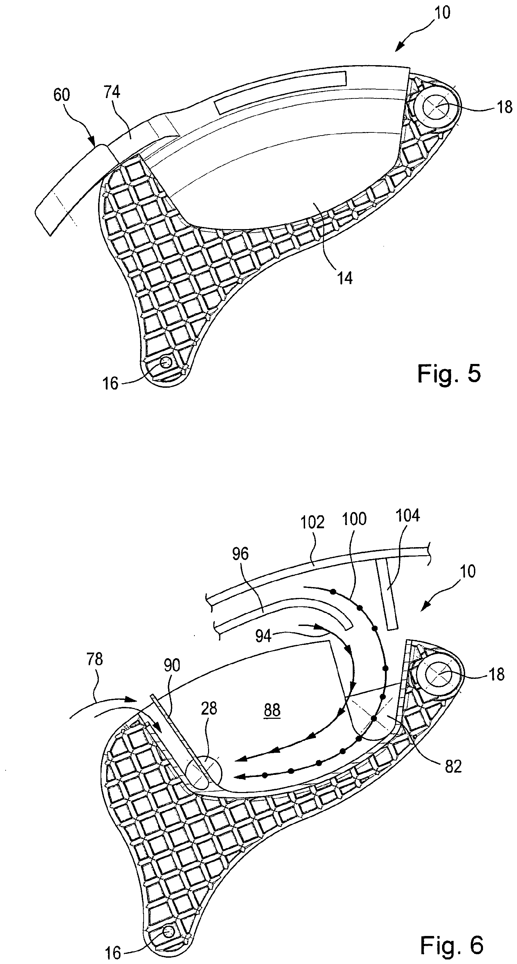

In der Platte 14 ist eine Wannenöffnung 86 ausgebildet, über die die Wanne, die an dem der Platte 14 abgewandten axialen Ende geschlossen ist, mit der axial gegenüberliegenden Seite der Platte 14 verbunden ist. An dieser, der Kupplungseinrichtung 36 zugewandten axialen Seite der Platte 14 ist eine in Querrichtung verlaufende Rinne 88 ausgebildet, die insbesondere in Fig. 6 dargestellt ist. Das Fluid aus der Wanne 82 fließt folglich in die Rinne 88 und hin zu der Öffnung der Zuführeinrichtung 28. Die Rinne 88 kann dabei insbesondere durch eine sich parallel zu der Platte 14 erstreckende Rinnenplatte ausgebildet sein, die an Ihrem Umfangsrand über einen Verbindungssteg (nicht näher bezeichnet) mit der Platte 14 verbunden ist, um die Rinne 88 nach unten hin abzudichten. Im Bereich der Öffnung der Zuführeinrichtung 28 ist in der Rinne 88 ferner ein Trennsteg 90 ausgebildet, mittels dessen die Eingangsöffnung der Zuführeinrichtung 28 unterteilt wird. Folglich kann von der Kupplungsauffangeinrichtung 60 aufgefangenes Fluid 78 getrennt und unbehindert in die Zuführeinrichtung 28 befördert werden, insbesondere unbehindert von einem Fluidstrom von Fluid, das aus der Wanne 82 in Richtung hin zu der Zuführeinrichtung 28 strömt.

Die Wanne 82 könnte einer Abtropfschulter am Innenumfang des Getriebegehäuses 22 zugeordnet sein, so dass an der Innenwand des Getriebegehäuse entlangströmendes Fluid in die Wanne 82 geleitet wird. Eine derartige einfache Abstreifschulter wirkt jedoch in der Regel nur in einer Drehrichtung des ersten Zahnrades 48 und/oder des zweiten Zahnrades 52.

Vorliegend ist Sorge dafür getroffen, dass Fluid in beiden Drehrichtungen in die Wanne 82 zugeführt werden kann. In einer ersten Drehrichtung 92 des ersten Zahnrades 48 und des zweiten Zahnrades 52 wird Fluid über den Bereich des Eingriffs zwischen den Zahnrädern 48, 52 hochgeschleudert wie es in Fig. 1 und Fig. 2 bei 94 angedeutet ist. Das hochgeschleuderte Fluid 94 wird dabei auf eine erste Leitrippe 96 geführt, die parallel zu einer Gehäuseinnenwand 102 angeordnet ist. Die erste Leitrippe 96 leitet das Fluid dann im Wesentlichen in Umfangsrichtung bis hin zu einem axialen Ende der Leitrippe 96, die in Richtung hin zu der Wanne 92 nach radial innen abgebogen ist, um das in der ersten Drehrichtung 92 hochgeschleuderte Fluid 94 in die Wanne 82 zu fördern, wie es insbesondere in Fig. 1, Fig. 2 und Fig. 6 zu erkennen ist.

In der zweiten, entgegengesetzten Drehrichtung 98 wird Fluid 100 über das zweite Zahnrad 52 nach oben geschleudert. Hierbei wird das Fluid 100 zunächst auf die Gehäuseinnenwand 102 geschleudert, von wo es in den Bereich zwischen der Gehäuseinnenwand 102 und der ersten Leitrippe 96 in Umfangsrichtung befördert wird, wie es in Fig. 2 und Fig. 6 dargestellt ist. An der Gehäuseinnenwand 102 ist ferner eine zweite Leitrippe 104 vorgesehen, die sich in radialer Richtung erstreckt, und mittels der das an der Gehäuseinnenwand 102 in tangentialer Richtung strömende Fluid radial nach innen in die Wanne 82 hinein abgelenkt wird, wie es insbesondere in Fig. 6 dargestellt ist.

Folglich kann über das System aus zwei Leitrippen 96, 104 gewährleistet werden, dass Fluid unabhängig von der Drehrichtung des Radsatzes 48, 52 in die Wanne 82 befördert wird. Folglich kann gewährleistet werden, dass auch bei nicht laufendem Antriebsmotor, wenn also ein Korb der Kupplungseinrichtung 36 still steht und folglich über die Kupplungsauffangeinrichtung 60 kein Fluid gefördert werden kann, Fluid in die Wanne 82 befördert wird, sobald sich das Fahrzeug bewegt, beispielsweise bei einem Abschleppvorgang, wobei die angetriebenen Räder sowohl in Vorwärtsrichtung als auch in Rückwärtsrichtung bewegt werden können. In beiden Fällen gelang Fluid in die Wanne 82 und kann so für eine hinreichende Fluidversorgung von angeschlossenen Fluidverbrauchern sorgen.

In anderen Worten handelt es sich bei der erfindungsgemäßen Fluidführungsvorrichtung um einen multifunktionalen Fluidzuführtrichter, der es, vorzugsweise in Verbindung mit geeigneten Gehäusekonturen, ermöglicht, unter allen Betriebszuständen eine sichere Fluidversorgung von Fluidverbrauchern zu gewährleisten. Dabei bildet dieser "Trichter" eine Ölfangkontur, die das von der nasslaufenden Kupplungseinrichtung 38 nach außen geschleuderte Fluid auffängt und so umleitet, dass es vorzugsweise mit einer hohen Geschwindigkeit sowie mit einem hohen Volumenstrom in den Trichter (Arm 62) gedrückt wird und so das Fluid hinzu der Zuführeinrichtung 28 führen kann. Dieses Fluid kann dann für eine Fluidversorgung von Losrädern und Lagerstellen verwendet werden. Ferner kann das Fluid, das dann in hohen Strömungsraten bereitgestellt wird, durch die Welle 46 weitergeleitet und zu einer Fluidverbindungsbohrung in eine Getriebeeingangswelle umgeleitet werden. Von dort kann das Fluid dann zu einem Support-Lager weitergeleitet werden, mittels dessen die Kupplungseinrichtung 38 drehbar in Bezug auf das Gehäuse gelagert ist. Aufgrund der Fluidfangkontur der Kupplungsauffangeinrichtung 60 ist dabei gewährleistet, dass hierfür immer genügend Öl zur Verfügung steht. Für ein stehendes Fahrzeug mit laufendem Verbrennungsmotor ist somit eine Ölversorgung aller Bauteile gewährleistet.

Um die zugeführte Fluidmenge weiter zu erhöhen, kann durch das zweite Zahnrad 52, das in den Fluidsumpf 56 plantscht, Öl über eine Leitrippenanordnung in die Wanne 82 geleitet werden, und von dort durch die Trennwand 20 hindurch in die Rinne 88 gefördert werden. Dieses zusätzliche Fluid wird über die Zuführeinrichtung 28 zu der Welle 46 geleitet. Die Getriebeauffangeinrichtung ist folglich insbesondere dann von Bedeutung, wenn der Antriebsmotor nicht läuft, das Fahrzeug jedoch beispielsweise durch Abschleppen bewegt wird. Auch hier durch ist gewährleistet, dass das Support-Lager weiterhin Fluid erhält.

## Patentansprüche

1. Fluidführungsvorrichtung (10) zur Fluidführung in einem Kraftfahrzeuggetriebe (34), das eine nass laufende Kupplung (36) und ein Stufengetriebe (38) aufweist, mit einer Basis (12), die dazu ausgebildet ist, um an einem Getriebegehäuse (22) befestigt zu werden, mit einer Auffangeinrichtung (26) zum Auffangen von Fluid (78; 94; 100) und mit einer Zuführeinrichtung, die mit der Auffangeinrichtung verbunden ist, so dass aufgefangenes Fluid (78; 94; 100) über die Zuführeinrichtung (28) an einen Fluidverbraucher (46) geführt werden kann, wobei die Auffangeinrichtung (26) eine Kupplungsauffangeinrichtung (60) aufweist, die dazu ausgebildet ist, im eingebauten Zustand von der Kupplung (36) im Betrieb mitgenommenes Fluid (78) aufzufangen, und eine Getriebeauffangeinrichtung (80) aufweist, die dazu ausgebildet ist, im eingebauten Zustand von wenigstens einem Zahnrad (48; 52) im Betrieb mitgenommenes Fluid (94; 100) aufzufangen,
**dadurch gekennzeichnet, dass**
die Zuführeinrichtung (28) sich in einer Längsrichtung (84) von der Basis erstreckt.

2. Fluidführungsvorrichtung nach Anspruch 1, **dadurch gekennzeichnet, dass** die Kupplungsauffangeinrichtung (60) und die Getriebeauffangeinrichtung (80) sich in entgegengesetzten Längsrichtungen (64, 84) von der Basis (12) erstrecken.

3. Fluidführungsvorrichtung nach Anspruch 1 oder 2, **dadurch gekennzeichnet, dass** die Fluidführungsvorrichtung (10) als einstückiges Bauteil ausgebildet ist.

4. Fluidführungsvorrichtung nach einem der Ansprüche 1 - 3, **dadurch gekennzeichnet, dass** die Zuführeinrichtung (28) einen Rohrstutzen (28) aufweist, der dazu ausgebildet ist, in eine Fluidzuführöffnung einer Welle (46) eingeführt zu werden.

5. Fluidführungsvorrichtung nach einem der Ansprüche 1 - 4, **dadurch gekennzeichnet, dass** die Zuführeinrichtung (28) zumindest im Bereich der Verbindung mit der Auffangeinrichtung (26) geteilt ist, so dass Fluid (78) von der Kupplungsauffangeinrichtung (60) und Fluid (94, 100) von der Getriebeauffangeinrichtung (80) in die Zuführeinrichtung (28) geleitet werden können, ohne sich gegenseitig zu behindern.

6. Fluidführungsvorrichtung nach einem der Ansprüche 1 - 5, **dadurch gekennzeichnet, dass** die Basis (12) eine sich in radialer Richtung erstreckende Platte (14) aufweist, wobei an der Platte (14) eine Rinne (88) ausgebildet ist, die die Getriebeauffangeinrichtung (80) mit der Zuführeinrichtung (28) verbindet.

7. Fluidführungsvorrichtung nach einem der Ansprüche 1 - 6 oder nach dem Oberbegriff des Anspruchs 1, **dadurch gekennzeichnet, dass** die Auffangeinrichtung (26) einen Arm (62) aufweist, der sich von der Basis (12) erstreckt und dazu ausgebildet ist, um parallel zu einer Innenwand (68) des Getriebegehäuses (22) angeordnet zu werden.

8. Fluidführungsvorrichtung nach Anspruch 7, **dadurch gekennzeichnet, dass** der Arm (62) einen gegenüber einer Längsachse (66) geneigten Abschnitt (70) aufweist, der dazu ausgebindet ist, in einer Umfangsrichtung um die Längsachse (66) herum strömendes Fluid (78) aufzufangen und in Richtung hin zu der Basis (12) zu fördern.

9. Kraftfahrzeuggetriebe (34) mit einer ersten drehend in einen Fluidsumpf (56) eintauchenden Baugruppe (53) und mit einer zweiten drehend in den Fluidsumpf (56) eintauchenden Baugruppe (54), wobei die erste und die zweite Baugruppe (53, 54) durch eine Trennwand (20) voneinander abgegrenzt sind, und mit einer Fluidführungsvorrichtung (10), nach einem der Ansprüche 1 - 8, **dadurch gekennzeichnet, dass** die Fluidführungsvorrichtung (10) eine Basis (12) aufweist, die auf der axialen Seite der ersten Baugruppe (53) an der Trennwand (20) festgelegt ist, wobei die Fluidführungsvorrichtung (10) eine Auffangeinrichtung(26, 60) aufweist, die dazu ausgebildet ist, von der ersten Baugruppe (53) mitgenommenes Fluid (78) aufzufangen und zu der Zuführeinrichtung (28) zu fördern, die sich von der Basis (12) aus durch die Trennwand (20) hindurch erstreckt.

10. Kraftfahrzeuggetriebe nach Anspruch 9 oder nach dem Oberbegriff des Anspruchs 9, **dadurch gekennzeichnet, dass** die Fluidführungsvorrichtung (10) eine sich in einer Längsrichtung (84) erstreckende Wanne (82) aufweist, die in axialer Überschneidung mit einem Zahnrad (48, 52) der zweiten Baugruppe (54) angeordnet ist, wobei an der Trennwand (20) eine erste Leitrippe (96) festgelegt ist, die in Bezug auf die Wanne (82) so angeordnet ist, dass Fluid (94) bei einer ersten Drehrichtung (92) des Zahnrades (48, 52) mittels der ersten Leitrippe (96) in die Wanne (82) gefördert wird, und/oder wobei an der Trennwand (20) eine zweite Leitrippe (104) festgelegt ist, die in Bezug auf die Wanne (82) so angeordnet ist, dass Fluid (100) bei einer zweiten Drehrichtung (98) des Zahnrades (48, 52) mittels der zweiten Leitrippe (104) in die Wanne (82) gefördert wird.

## Claims

1. Fluid-channelling device (10) for channelling fluid in a motor vehicle transmission (34) which comprises a wet-running clutch (36) and a multi-step gearbox (38), with a base (12) which is designed to be fastened to a gearbox housing (22), with a collecting device (26) for collecting fluid (78; 94; 100) and with a feeding device which is connected to the collecting device such that collected fluid (78; 94; 100) can be channelled via the feeding device (28) to a fluid consumer (46), wherein the collecting device (26) comprises a clutch collecting device (60) which is designed, in the installed state, to collect fluid (78) entrained by the clutch (36) during operation, and comprises a gearbox collecting device (80) which is designed, in the installed state, to collect fluid (94; 100) entrained by at least one gearwheel (48; 52) during operation,
**characterized in that**
the feeding device (28) extends in a longitudinal direction (84) from the base.

2. Fluid-channelling device according to Claim 1, **characterized in that** the clutch collecting device (60) and the gearbox collecting device (80) extend in opposite longitudinal directions (64, 84) from the base (12).

3. Fluid-channelling device according to Claim 1 or 2, **characterized in that** the fluid-channelling device (10) is designed as a one-piece component.

4. Fluid-channelling device according to one of Claims 1-3, **characterized in that** the feeding device (28) comprises a tubular nozzle (28) which is designed to be introduced into a fluid-feeding opening of a shaft (46).

5. Fluid-channelling device according to one of Claims 1-4, **characterized in that** the feeding device (28) is divided at least in the region of the connection with the collecting device (26) such that fluid (78) from the clutch collecting device (60) and fluid (94, 100) from the gearbox collecting device (80) can be guided into the feeding device (28) without interfering with one another.

6. Fluid-channelling device according to one of Claims 1-5, **characterized in that** the base (12) comprises a plate (14) extending in the radial direction, wherein a channel (88) which connects the gearbox collecting device (80) to the feeding device (28) is formed on the plate (14).

7. Fluid-channelling device according to one of Claims 1-6 or according to the preamble of Claim 1, **characterized in that** the collecting device (26) comprises an arm (62) which extends from the base (12) and is designed to be arranged parallel to an inner wall (68) of the gearbox housing (22).

8. Fluid-channelling device according to Claim 7, **characterized in that** the arm (62) comprises a portion (70) which is inclined with respect to a longitudinal axis (66) and which is designed to collect fluid (78) flowing in a circumferential direction about the longitudinal axis (66) and to convey it in the direction towards the base (12).

9. Motor vehicle transmission (34) with a first assembly (53) rotationally plunging into a fluid sump (56) and with a second assembly (54) rotationally plunging into the fluid sump (56), wherein the first and the second assembly (53, 54) are delimited from one another by a partition wall (20), and with a fluid-channelling device (10) according to one of Claims 1-8, **characterized in that** the fluid-channelling device (10) comprises a base (12) which is secured to the partition wall (20) on the axial side of the first assembly (53), wherein the fluid-channelling device (10) comprises a collecting device (26, 60) which is designed to collect fluid (78) entrained by the first assembly (53) and to convey it to the feeding device (28), which extends from the base (12) through the partition wall (20).

10. Motor vehicle transmission according to Claim 9 or according to the preamble of Claim 9, **characterized in that** the fluid-channelling device (10) comprises a trough (92) which extends in a longitudinal direction (84) and which is arranged so as to axially overlap a gearwheel (48, 52) of the second assembly (54), wherein a first guide rib (96) is secured to the partition wall (20) and is arranged with respect to the trough (82) in such a way that, in a first direction of rotation (92) of the gearwheel (48, 52), fluid (94) is conveyed into the trough (82) by means of the first guide rib (96), and/or wherein a second guide rib (104) is secured to the partition wall (20) and is arranged with respect to the trough (82) in such a way that, in a second direction of rotation (98) of the gearwheel (48, 52), fluid (100) is conveyed into the trough (82) by means of the second guide rib (104).

## Revendications

1. Dispositif de guidage de fluide (10) pour le guidage de fluide dans une boîte de vitesses de véhicule automobile (34) qui présente un embrayage humide (36) et une boîte de vitesses étagée (38), comprenant une base (12) qui est réalisée de manière être fixée sur un boîtier de boîte de vitesses (22), comprenant un dispositif de collecte (26) pour recueillir le fluide (78 ; 94 ; 100) et comprenant un dispositif d'alimentation qui est raccordé au dispositif de collecte de telle sorte que le fluide recueilli (78 ; 94 ; 100) puisse être conduit par le biais du dispositif d'alimentation (28) jusqu'à un consommateur de fluide (46), le dispositif de collecte (26) présentant un dispositif de collecte d'embrayage (60) qui est réalisé dans l'état installé de manière à recueillir le fluide (78) entraîné par l'embrayage (36) pendant le fonctionnement, et présentant un dispositif de collecte de boîte de vitesses (80) qui est réalisé dans l'état installé de manière à recueillir le fluide (94 ; 100) entraîné par au moins une roue dentée (48 ; 52) pendant le fonctionnement, **caractérisé en ce que**
le dispositif d'alimentation (28) s'étend depuis la base dans une direction longitudinale (84).

2. Dispositif de guidage de fluide selon la revendication 1, **caractérisé en ce que** le dispositif de collecte d'embrayage (60) et le dispositif de collecte de boîte de vitesses (80) s'étendent dans des directions longitudinales opposées (64, 84) depuis la base (12).

3. Dispositif de guidage de fluide selon la revendication 1 ou 2, **caractérisé en ce que** le dispositif de guidage de fluide (10) est réalisé sous forme de composant d'une seule pièce.

4. Dispositif de guidage de fluide selon l'une quelconque des revendications 1 à 3, **caractérisé en ce que** le dispositif d'alimentation (28) présente une tubulure (28) qui est réalisée de manière à être introduite dans une ouverture d'alimentation de fluide d'un arbre (46).

5. Dispositif de guidage de fluide selon l'une quelconque des revendications 1 à 4, **caractérisé en ce que** le dispositif d'alimentation (28) est divisé au moins dans la région du raccordement au dispositif de collecte (26) de telle sorte que du fluide (78) puisse être conduit dans le dispositif d'alimentation (28) depuis le dispositif de collecte d'embrayage (60) et que du fluide (94, 100) puisse être conduit depuis le dispositif de collecte de boîte de vitesses (80) dans le dispositif d'alimentation (28) sans se gêner mutuellement.

6. Dispositif de guidage de fluide selon l'une quelconque des revendications 1 à 5, **caractérisé en ce que** la base (12) présente une plaque (14) s'étendant dans la direction radiale, une rigole (88) étant réalisée au niveau de la plaque (14), laquelle relie le dispositif de collecte de boîte de vitesses (80) au dispositif d'alimentation (28).

7. Dispositif de guidage de fluide selon l'une quelconque des revendications 1 à 6, ou selon le préambule de la revendication 1, **caractérisé en ce que** le dispositif de collecte (26) présente un bras (62) qui s'étend depuis la base (12) et qui est réalisé de manière à être disposé parallèlement à une paroi interne (68) du boîtier de boîte de vitesses (22).

8. Dispositif de guidage de fluide selon la revendication 7, **caractérisé en ce que** le bras (62) présente une portion (70) inclinée par rapport à un axe longitudinal (66), laquelle est réalisée de manière à recueillir du fluide (78) s'écoulant autour de l'axe longitudinal (66) dans une direction périphérique et à le refouler dans la direction de la base (12).

9. Boîte de vitesses de véhicule automobile (34) comprenant un premier module (53) en rotation plongeant dans un carter de fluide (56) et comprenant un deuxième module (54) en rotation plongeant dans le carter de fluide (56), le premier et le deuxième module (53, 54) étant séparés l'un de l'autre par une paroi de séparation (20), et comprenant un dispositif de guidage de fluide (10) selon l'une quelconque des revendications 1 à 8, **caractérisée en ce que** le dispositif de guidage de fluide (10) présente une base (12) qui est fixée sur le côté axial du premier module (53) à la paroi de séparation (20), le dispositif de guidage de fluide (10) présentant un dispositif de collecte (26, 60) qui est réalisé de manière à recueillir du fluide (78) entraîné par le premier module (53) et à le refouler vers le dispositif d'alimentation (28) qui s'étend depuis la base (12) à travers la paroi de séparation (20).

10. Boîte de vitesses de véhicule automobile selon la revendication 9 ou selon le préambule de la revendication 9, **caractérisée en ce que** le dispositif de guidage de fluide (10) présente une cuve (82) s'étendant dans une direction longitudinale (84), qui est disposée de manière à chevaucher axialement une roue dentée (48, 52) du deuxième module (54), une première ailette de guidage (96) étant fixée à la paroi de séparation (20), laquelle est disposée par rapport à la cuve (82) de telle sorte que du fluide (94) soit refoulé dans la cuve (82) au moyen de la première ailette de guidage (96) lorsque la roue dentée (48, 52) tourne dans un premier sens, et/ou une deuxième ailette de guidage (104) étant fixée à la paroi de séparation (20), laquelle est disposée par rapport à la cuve (82) de telle sorte que du fluide (100) soit refoulé dans la cuve (82) au moyen de la deuxième ailette de guidage (104) lorsque la roue dentée (48, 52) tourne dans un deuxième sens de rotation (98).
